# EUROPÄISCHE PATENTSCHRIFT

(11) **EP 1 828 738 B1**
(45) Veröffentlichungstag und Bekanntmachung des Hinweises auf die Patenterteilung: **10.12.2008**
(21) Anmeldenummer: 05811012.3
(22) Anmeldetag: 29.11.2005
(51) Int. Cl.: G01M 3/20

(54) **LECKSUCHGERÄT MIT SCHNÜFFELSONDE**
LEAK DETECTOR WITH SNIFFER PROBE
DETECTEURS DE FUITES A SONDE RENIFLEUSE

(30) Priorität: 23.12.2004 DE 102004062102
(43) Veröffentlichungstag der Anmeldung: 05.09.2007
(73) Patentinhaber: Inficon GmbH, 50968 Köln (DE)
(72) Erfinder: GROSSE BLEY, Werner, 53125 Bonn (DE)
(74) Vertreter: Selting, Günther
(86) Internationale Anmeldenummer: PCT/EP2005/056319
(87) Internationale Veröffentlichungsnummer: WO 2006/069877

(56) Entgegenhaltungen:
- US-A- 4 477 986
- US-A- 5 347 845
- US-A1- 2004 194 533

## Beschreibung

Die Erfindung betrifft ein Lecksuchgerät mit Schnüffelsonde, wobei die Schnüffelsonde ein Handgerät mit Schnüffelspitze aufweist.

An viele Anlagen und Produkte in Industrie und Forschung werden hohe Anforderungen bezüglich ihrer Dichtheit gestellt. Bei in der Kältemittel-, Automobil- oder anderen Industrien hergestellten Prüflingen oder Baugruppen wird häufig die Schnüffellecksuche eingesetzt. Diese setzt voraus, dass sich im Prüfobjekt ein Testgas, vorzugsweise unter Überdruck, befindet. Als Testgas wird häufig Helium eingesetzt, das vor dem Verschließen der auf Lecks zu untersuchenden Hohlräume darin eingebracht wird. Bekannt ist auch die Benutzung von ohnehin in Testobjekten vorhandenen Gasen als Testgas, z. B. SF₆- oder Halogen-Gase in der Kältemittelindustrie.

Der auf Lecks zu untersuchende Prüfling wird mit Hilfe eines Handgeräts mit Schnüffelspitze abgetastet. Die Schnüffelspitze nimmt das aus einem eventuell vorhandenen Leck ausströmende Testgas auf und führt dieses einem Testgasdetektor zu. Dieser kann sich zusammen mit den anderen Komponenten in einem Grundgerät befinden, mit dem das Handgerät über eine flexible Schnüffelleitung in Verbindung steht. Ist der Testgasdetektor ausreichend klein, z. B. ein Infrarot-Gasanalysator, kann er auch in dem Handgerät selbst untergebracht sein, wodurch die Ansprechzeit verkürzt wird.

Lecksuchgeräte, die ein von Hand gehaltenes Handgerät aufweisen, können zu Fehlmessungen führen, wenn das Handgerät falsch bedient wird. So kann eine durch fehlende Konzentration hervorgerufene unruhige Führung des Handgerätes dazu führen, dass "nichts gemessen" wird, das Testobjekt also als gut, d. h. dicht, eingestuft wird. Entsprechendes gilt auch wenn der Messvorgang bei einem falschen Abstand der Schnüffelsonde vom Testobjekt ausgelöst wird.

In WO 03/008923 A2 ist ein Schnüffellecksucher beschrieben, der ein Handgerät mit einem darin untergebrachten Beschleunigungssensor aufweist. Mit Hilfe des Beschleunigungssensors werden durch Bewegungen des Handstückes gestörte Signale unterdrückt.

Der Erfindung liegt die Aufgabe zugrunde, ein Lecksuchgerät mit Schnüffelsonde zu schaffen, das weitgehende Sicherheit gegen unsachgemäße Bedienung bietet.

Das Lecksuchgerät nach der vorliegenden Erfindung ist durch den Patentanspruch 1 definiert. Hiernach ist an der Schnüffelspitze ein Abstandsdetektor zur Ermittlung eines vorgegebenen Abstandes der Schnüffelspitze von einem Testobjekt vorgesehen, der die Auslösung einer Testaktion nur bei Vorhandensein des richtigen Abstands zulässt. Durch die Erfindung ist sichergestellt, dass die Testaktion nur dann erfolgt, wenn der korrekte Abstand der Schnüffelspitze vom Testobjekt eingehalten wird. Auf diese Weise werden Fehlmessungen, die auf einen falschen Messabstand zurückzuführen sind, vermieden.

Der Abstandsdetektor kann grundsätzlich von jeglicher Bauart sein. So kann beispielsweise als Abstandsdetektor ein induktiver oder kapazitiver Näherungsschalter verwendet werden. Bevorzugt wird als Abstandsdetektor ein optischer Detektor verwendet, der einen einen Lichtpunkt projizierenden Lichtsender und einen die reflektierte Intensität messenden Lichtempfänger aufweist. Ein derartiger Abstandsdetektor kann in der Schnüffelspitze so untergebracht werden, dass er deren Bauform nicht wesentlich vergrößert, so dass die Handhabbarkeit der Schnüffelsonde dadurch nicht beeinträchtigt wird. Induktive Näherungsschalter benötigen dagegen mehr Platz.

Eine bevorzugte Weiterbildung der Erfindung sieht vor, dass ein Beschleunigungsdetektor zur Feststellung des Ruhighaltens des Handgerätes vorgesehen ist, der die Auslösung einer Testaktion nur bei ruhig gehaltenem Handgerät zulässt. Ein derartiger Beschleunigungsdetektor kann beispielsweise eine träge Masse enthalten, die in Bezug auf das Gehäuse des Handgerätes bewegbar ist und einen elektrischen Kontakt schließt, wenn sie ihre Ruheposition verlässt. Der Beschleunigungsdetektor stellt sicher, dass eine Messung nur bei ruhig gehaltenem Handgerät erfolgt.

Gemäß einer bevorzugten Weiterbildung der Erfindung ist an der Schnüffelspitze ein Tintenaustritt vorgesehen, der bei oder nach Durchführung einer Messaktion betätigt wird und eine Tintenmarkierung auf das Testobjekt sprüht. Die Testmarkierung kann aus einem oder aus mehreren Tintenstößen bestehen. Sie dokumentiert die Durchführung eines Schnüffelvorgangs an der betreffenden Stelle des Testobjekts. Ferner kann in dem Fall, dass mehrere Tintenstöße nacheinander erfolgen, dokumentiert werden, dass die Schnüffelsonde ruhig gehalten wurde, wenn sämtliche Tintenpunkte überlagert sind, oder eine Bewegung der Schnüffelsonde erfolgte, wenn die Tintenpunkte verteilt angeordnet sind.

Gemäß einer bevorzugten Weiterbildung der Erfindung ist ein manueller Taster vorgesehen, durch dessen Betätigung die Testaktion nur nach Meldung der Erfüllung der Testbedingungen ausgeführt wird.

Im Folgenden wir unter Bezugnahme auf die Zeichnungen ein Ausführungsbeispiel der Erfindung näher erläutert.

Es zeigen:
- Fig. 1: eine schematische Darstellung des Lecksuchgerätes, und
- Fig. 2: in vergrößertem Maßstab eine Darstellung der Einzelheit II aus Fig. 1 zur Verdeutlichung der Funktion des optischen Abstandsdetektors.

Das dargestellte Lecksuchgerät weist eine Schnüffelsonde 10 auf, die aus einem Handgerät 11 und einer davon abstehenden Schnüffelspitze 12 besteht. Die Schnüffelsonde 10 kann beispielsweise pistolenartig ausgebildet sein. In jedem Fall bildet sie ein Handgerät, das in der Hand gehalten und geführt werden kann, wobei das Ende 13 der Schnüffelspitze 12 an das Testobjekt herangeführt wird, um aus dem Testobjekt austretendes Testgas aufzunehmen. Die Schnüffelspitze 12 kann ein an dem Handgerät 11 befestigtes Hüllrohr 14 aufweisen, in dem die noch zu erläuternden Leitungen untergebracht sind und das am äußeren Ende offen ist.

Durch die Schnüffelspitze 12 verlaufen eine Gasleitungskapillare 15, zwei Lichtleiter 16,17 und eine Tintenleitung 18. Jede dieser Leitungen ist an dem Ende 13 offen.

Die Gasleitungskapillare 15 ist durch das Handgerät 11 hindurch geführt. Vom rückwärtigen Ende des Handgerätes 11 erstreckt sich eine Schnüffelleitung 20 zu einem Grundgerät 21. Die Schnüffelleitung 20 enthält die nachstehend erläuterten Leitungen. Sie ist insgesamt flexibel ausgebildet, so dass das Handgerät 10 relativ zu dem Grundgerät 11 bewegt und manuell geführt werden kann. Das Grundgerät 21 ist mit einer Vakuumpumpe 22 versehen, die in einer (nicht dargestellten) Vakuumkammer des Grundgerätes 21 ein Vakuum erzeugt, wodurch die Gasleitungskapillare 15 am Ende 13 Gas ansaugt. Das Grundgerät ist ferner mit einem Testgas-Detektor TD versehen, welcher im Stande ist, das Testgas, das aus dem Testobjekt austritt, selektiv zu erkennen und von anderen Gasen zu unterscheiden. Als Testgas-Detektor kann zum Beispiel ein Massenspektrometer oder ein Infrarot-Gasanalysator dienen. Das Grundgerät 21 versorgt außerdem über elektrische Leitungen 23,24 die Schnüffelsonde 10 mit Spannung. Außerdem verbinden (nicht dargestellte) Signalleitungen das Grundgerät 21 mit der Schnüffelsonde 10.

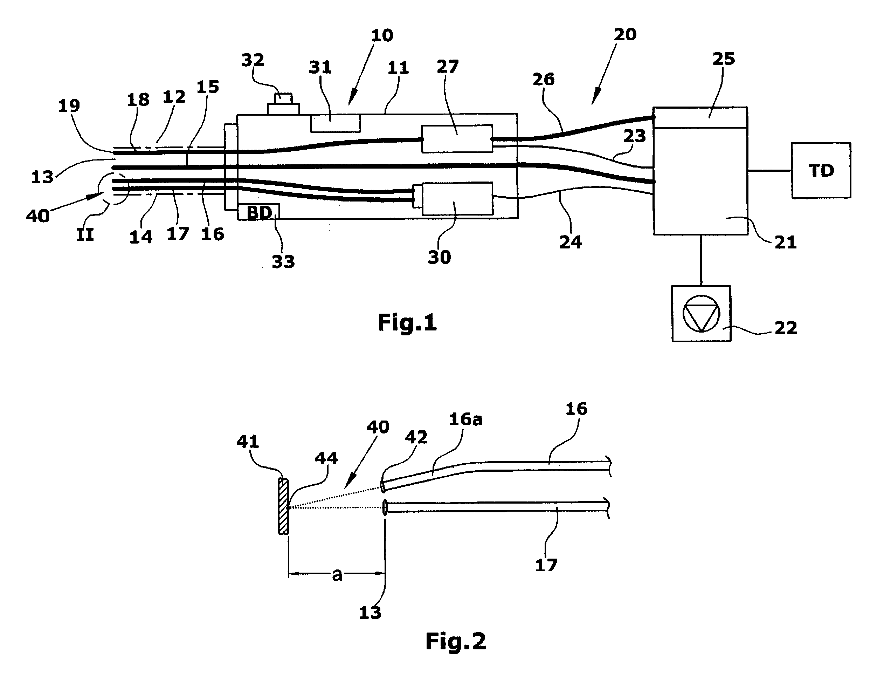

Das Grundgerät 21 enthält einen Tintenversorgungsteil 25, der über eine Tintenversorgungsleitung 26 mit einem im Handgerät 11 enthaltenen elektromagnetischen Tintenventil 27 verbunden ist. Der Tintenversorgungsteil 25 liefert Tinte mit einem Überdruck von etwa 1 bar an das Tintenventil 27. Bei Öffnung des Tintenventils 27 gelangt ein Tintenstrahl vom Tintenaustritt 19 auf das in Fig. 1 nicht dargestellte Testobjekt.

Die beiden Lichtleiter 16 und 17 sind im Handgerät 11 mit einem Abstandserkennungsgerät 30 verbunden. Sowohl das Tintenventil 27 als auch das Abstandserkennungsgerät 30 werden von einer Steuereinheit 31 im Handgerät gesteuert. Die Steuereinheit 31 ist mit einer Steuereinheit des Grundgerätes 21 elektrisch verbunden.

An dem Handgerät 11 ist ein manueller Taster 32 vorgesehen, der elektrisch ebenfalls mit der Steuereinheit 31 verbunden ist. Wird der Taster 32 betätigt, so bedeutet dies die Eingabe eines Befehls zur Durchführung einer Messaktion.

Schließlich enthält das Handgerät 11 einen Beschleunigungsdetektor (BD) 33, der auf Beschleunigungen des Handgerätes reagiert und auf diese Weise feststellt, ob das Handgerät ruhig gehalten wird.

In Fig. 2 ist eine Ausführungsform des optischen Abstandsdetektors 40 dargestellt, der den Abstand a des Endes 13 der Schnüffelspitze 12 von dem Testobjekt 41 feststellt. In den Lichtleiter 16 wird von dem Abstandserkennungsgerät 30 Licht am rückwärtigen Ende eingespeist, so dass das vordere Ende als Lichtsender 42 wirkt, welches einen Lichtstrahl aussendet. Der aus dem Endbereich 16a austretende Lichtstrahl erzeugt auf der Oberfläche des Testobjekts 41 einen Lichtpunkt 44. Hält die Schnüffelsonde den gewünschten Abstand a von dem Testobjekt 41 genau ein, so empfängt der Lichtleiter 17 eine definierte Lichtintensität. Der Lichtleiter 17 ist an einen Lichtdetektor angeschlossen, der anspricht, wenn die Intensität des aufgenommenen Lichts einen Schwellenwert übersteigt. Würde der korrekte Abstand a nicht eingehalten, so würde kein oder weniger Licht in den Lichtleiter 17 einfallen. Der Lichtsender, der Licht in den Lichtleiter 16 einspeist, und der Lichtempfänger, der Licht aus dem Lichtleiter 17 empfängt, sind in dem Abstandserkennungsgerät 30 untergebracht.

Das beschriebene Lecksuchgerät arbeitet wie folgt:

Bei Annäherung der Schnüffelspitze 12 an ein Testobjekt 41 wird bei Einnehmen eines gewissen Abstandes a oder Abstandsbereiches die Messung freigegeben.

Entweder wird die Messung nun automatisch gestartet oder der Bediener löst sie durch Drücken des Tasters 32 aus. Darauf hin wird ein Impuls an das Tintenventil 27 gegeben, so dass ein Tintenpunkt auf das Testobjekt 41 gespritzt wird. Alternativ kann eine Salve von Tintenpunkten in schneller Folge gespritzt werden, wodurch mehrere Tintenpunkte erzeugt werden. Die auf dem Testobjekt erzeugte Tintenmarkierung gibt die Stelle an, an der die Testaktion durchgeführt wurde. Außerdem gibt diese Markierung an, ob die Schnüffelsonde ruhig gehalten wurde.

Die Auslösung der Testaktion kann zusätzlich oder alternativ von weiteren Bedingungen abhängig gemacht werden. So ist in Fig. 1 der Beschleunigungsdetektor (BD) 33 dargestellt, der die Freigabe der Messaktion nur dann veranlasst, wenn die Beschleunigung unterhalb eines Grenzwertes liegt. Auf diese Weise wird sichergestellt, dass die Messung nur dann durchgeführt wird, wenn die Schnüffelsonde 10 ruhig gehalten wird. Für die Übernahme eines gültigen Messwertes können weitere Bedingungen aufgestellt werden, wie beispielsweise: die Überschreitung eines Triggers, die Unterschreitung einer Standardabweichung bei Aufnahme mehrerer Messwerte in schneller Folge usw.

Die Erfindung bietet eine gewisse Sicherheit dafür, dass die Leckerkennung unter regulären Bedingungen durchgeführt wurde. Sie erschwert eine unsachgemäße Handhabung des Lecksuchgerätes.

## Patentansprüche

1. Lecksuchgerät mit Schnüffelsonde, wobei die Schnüffelsonde (10) ein Handgerät (11) mit Schnüffelspitze (12) aufweist,
**dadurch gekennzeichnet,**
**dass** an der Schnüffelsonde (10) ein Abstandsdetektor (40) zur Ermittlung eines vorgegebenen Abstands der Schnüffelspitze (12) von einem Testobjekt (41) vorgesehen ist, der die Auslösung einer Testaktion nur bei Vorhandensein des richtigen Abstands (a) zulässt.

2. Lecksuchgerät nach Anspruch 1, **dadurch gekennzeichnet, dass** ein Beschleunigungsdetektor (33) zur Feststellung des Ruhighaltens des Handgeräts (11) vorgesehen ist, der die Auslösung einer Testaktion nur bei ruhig gehaltenem Handgerät zulässt.

3. Lecksuchgerät nach Anspruch 1 oder 3, **dadurch gekennzeichnet, dass** an der Schnüffelspitze (12) ein Tintenaustritt (19) vorgesehen ist, der bei oder nach Durchführung einer Messaktion betätigt wird und eine Tintenmarkierung auf das Testobjekt (41) sprüht.

4. Lecksuchgerät nach einem der Ansprüche 1 bis 3, **dadurch gekennzeichnet, dass** der Abstandsdetektor (40) ein optischer Detektor ist, der einen einen Lichtpunkt projizierenden Lichtsender und einen das reflektierte Licht erkennenden Lichtempfänger aufweist.

5. Lecksuchgerät nach Anspruch 4, **dadurch gekennzeichnet, dass** der Lichtsender und/oder der Lichtempfänger einen Lichtleiter (16,17) aufweist, der mit einem in dem Handgerät (11) angeordneten Abstandserkennungsgerät (30) verbunden ist.

6. Lecksuchgerät nach einem der Ansprüche 1 bis 5, **dadurch gekennzeichnet, dass** das Handgerät (11) über eine Schnüffelleitung (20) mit einem Grundgerät (21) verbunden ist, das eine Vakuumpumpe (22) und einen Testgasdetektor (TD) aufweist.

7. Lecksuchgerät nach einem der Ansprüche 1 bis 6, **dadurch gekennzeichnet, dass** ein manueller Taster (32) vorgesehen ist, durch dessen Betätigung, die Testaktion nur nach Meldung der Erfüllung der Testbedingungen ausgeführt wird.

## Claims

1. A leak detector comprising a sniffer probe, the sniffer probe (10) including a hand-held device (11) with a sniffer tip (12),
**characterized in that**
the sniffer probe (10) is provided with a distance detector (40) for detecting a defined distance of the sniffer tip (12) from a test object (41), which detector enables the initiation of a test only if the distance (a) is correct.

2. The leak detector of claim 1, **characterized in that** an acceleration detector (33) is provided for detecting whether the hand-held device (11) is held steadily and which enables an initiation of a test only if the hand-held device is held steadily.

3. The leak detector of claim 1 or 3, **characterized in that** an ink outlet (19) is provided at the sniffer tip (12), which is actuated upon or after a measurement and sprays an ink mark on the test object (41).

4. The leak detector of one of claims 1 to 3, **characterized in that** the distance detector (40) is an optical detector comprising a light transmitter projecting a light spot and a light receiver receiving the reflected light.

5. The leak detector of claim 4, **characterized in that** the light transmitter and/or the light receiver comprises a light guide (16, 17) connected to a distance detector (30) arranged in the hand-held device (11).

6. The leak detector of one of claims 1 to 5, **characterized in that** the hand-held device (11) is connected to a base device (21) through a sniffer line (20), the base device including a vacuum pump (22) and a test gas detector (TD).

7. The leak detector of one of claims 1 to 6, **characterized in that** a manual key switch (32) is provided, whose operation enables a test only after the fulfillment of the test conditions has been reported.

## Revendications

1. Détecteur de fuites à sonde renfleuse, la sonde renfleuse (10) étant un appareil à main avec une pointe renfleuse (12),
**caractérisé en ce que**
la sonde renfleuse (10) est prévue d'un détecteur de distance (40) pour la détection d'une distance prédéterminée entre la pointe renfleuse (12) et un objet de test (41), le détecteur permettant l'initialisation d'une action de test seulement si la distance correcte (a) est occupée.

2. Détecteur de fuites selon la revendication 1, **caractérisé en ce qu'**un détecteur d'accélération (33) est prévu pour détecter si l'appareil à main (11) est tenu tranquillement, le détecteur ne permettant l'initialisation d'une action de test qu'avec un appareil à main tenu tranquillement.

3. Détecteur de fuites selon la revendication 1 ou 2, **caractérisé en ce que** une sortie d'encre (19) est prévue à la pointe renfleuse (12), qui est opérée pendant ou après une action de mesurage et jaillit une marque en encre sur l'objet de test (41).

4. Détecteur de fuites selon une des revendications 1 à 3, **caractérisé en ce que** le détecteur de distance (40) est un détecteur optique qui comprend un émetteur de lumière projetant un point de lumière et un récepteur de lumière détectant la lumière réfléchie.

5. Détecteur de fuites selon la revendication 4, **caractérisé en ce que** l'émetteur de lumière et/ou le récepteur de lumière comprend un conduit de lumière (16, 17) relié à un appareil détecteur de distance (30) disposé dans l'appareil à main (11).

6. Détecteur de fuites selon une des revendications 1 à 5, **caractérisé en ce que** l'appareil à main (11) est relié à un appareil de base (21) par un conduit de renflage (20), l'appareil comprenant une pompe à vide (22) et un détecteur de gaz de test (TD).

7. Détecteur de fuites selon une des revendications 1 à 6, **caractérisé en ce qu'**un poussoir manuel (32) est prévu, en réponse à l'activation duquel l'action de test n'est exécutée qu'après les conditions de test sont satisfaites.
